(19) Europäisches Patentamt
European Patent Office
Office européen des brevets

(11) **EP 3 940 830 A1**

(12) **EUROPEAN PATENT APPLICATION**
published in accordance with Art. 153(4) EPC

(43) Date of publication:
**19.01.2022 Bulletin 2022/03**

(21) Application number: **20771153.2**

(22) Date of filing: **12.03.2020**

(51) International Patent Classification (IPC):
*H01M 4/96* [(2006.01)]     *H01M 8/18* [(2006.01)]

(52) Cooperative Patent Classification (CPC):
**H01M 4/96; H01M 8/18;** Y02E 60/50; Y02P 70/50

(86) International application number:
**PCT/JP2020/010824**

(87) International publication number:
**WO 2020/184665 (17.09.2020 Gazette 2020/38)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **13.03.2019  JP 2019046211**

(71) Applicant: **TOYOBO CO., LTD.**
**Osaka-shi**
**Osaka 530-8230 (JP)**

(72) Inventors:
• **NISHI, Kana**
  **Toda-shi, Saitama 335-0021 (JP)**
• **IWAHARA, Ryohei**
  **Otsu-shi, Shiga 520-0292 (JP)**
• **KOBAYASHI, Masaru**
  **Osaka-shi, Osaka 530-8230 (JP)**
• **MATSUMURA, Takahiro**
  **Otsu-shi, Shiga 520-0292 (JP)**

(74) Representative: **Vossius & Partner**
**Patentanwälte Rechtsanwälte mbB**
**Siebertstraße 3**
**81675 München (DE)**

(54) **CARBON ELECTRODE MATERIAL AND REDOX BATTERY**

(57)     A carbon electrode material of the present invention comprises carbon fibers (A); carbon particles (B) other than graphite particles; a carbon material (C) for binding the carbon fibers (A) and the carbon particles (B) to each other, and the carbon electrode material satisfies the following requirements. (1) a particle diameter of the carbon particles (B) other than graphite particles is not larger than 1 $\mu$m, (2) Lc(B) is not larger than 10 nm when Lc(B) represents a crystallite size, in a c-axis direction, obtained by X-ray diffraction in the carbon particles (B) other than graphite particles, (3) Lc(C)/Lc(A) is 1.0 to 5.0 when Lc(A) and Lc(C) represent crystallite sizes, in the c-axis direction, obtained by X-ray diffraction in the carbon fibers (A) and the carbon material (C), respectively, (4) a meso-pore specific surface area obtained from a nitrogen gas adsorption amount is less than 30 $m^2$/g, and (5) a number of oxygen atoms bound to a surface of the carbon electrode material is not less than 1% of a total number of carbon atoms on the surface of the carbon electrode material.

**EP 3 940 830 A1**

**Description**

TECHNICAL FIELD

The present invention relates to a carbon electrode material for use in a negative electrode of a redox battery, and more specifically to a carbon electrode material that allows the entirety of the redox battery to have excellent energy efficiency.

BACKGROUND ART

A redox battery is a battery that utilizes oxidation-reduction in an aqueous solution of redox ions, and is a high-capacity rechargeable battery having very high safety because of its mild reaction in only a liquid phase.

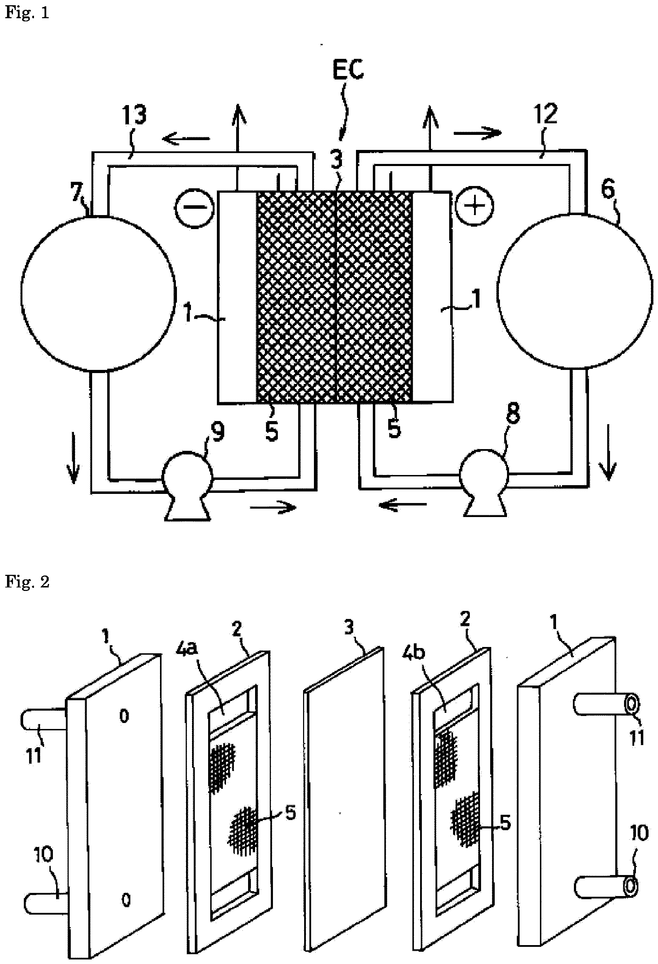

As shown in FIG. 1, the redox battery mainly includes outer tanks 6, 7 for storing electrolytes (positive electrode electrolyte, negative electrode electrolyte), and an electrolytic cell EC. In the electrolytic cell EC, an ion-exchange membrane 3 is disposed between current collecting plates 1, 1 opposing each other. In the redox battery, while electrolytes containing active materials are being fed from the outer tanks 6, 7 to the electrolytic cell EC by pumps 8, 9, electrochemical energy conversion, that is, charging and discharging is performed on electrodes 5 incorporated in the electrolytic cell EC. A carbon material that has chemical resistance, electrical conductivity, and liquid permeability is used for a material of the electrode 5.

As an electrolyte used for a redox battery, an aqueous solution that contains metal ions having the valence changed by oxidation-reduction is typically used. A type of the electrolyte for which a hydrochloric acid aqueous solution of iron is used for the positive electrode and a hydrochloric acid aqueous solution of chromium is used for the negative electrode is replaced by a type of the electrolyte for which a sulfuric acid aqueous solution of vanadium having high electromotive force is used for both the electrodes, thereby enhancing energy density.

In a redox battery in which a sulfuric acid acidic aqueous solution of vanadium oxysulfate is used for the positive electrode electrolyte, and a sulfuric acid acidic aqueous solution of vanadium sulfate is used for the negative electrode electrolyte, an electrolyte containing $V^{2+}$ is supplied to a liquid flow path on the negative electrode side, and an electrolyte containing $V^{5+}$ (ion containing oxygen in practice) is supplied to a liquid flow path on the positive electrode side, during discharging. In the liquid flow path on the negative electrode side, $V^{2+}$ emits an electron in a three-dimensional electrode and is oxidized to $V^{3+}$. The emitted electron passes through an external circuit to reduce $V^{5+}$ to $V^{4+}$ (ion containing oxygen in practice) in a three-dimensional electrode on the positive electrode side. According to the oxidation-reduction reaction, $SO_4^{2-}$ becomes insufficient in the negative electrode electrolyte, and $SO_4^{2-}$ is excessively increased in the positive electrode electrolyte, so that $SO_4^{2-}$ transfers from the positive electrode side to the negative electrode side through the ion-exchange membrane to maintain charge balance. Alternatively, also by transfer of $H^+$ from the negative electrode side to the positive electrode side through the ion-exchange membrane, the charge balance can be maintained. During charging, a reaction reverse to that in discharging proceeds.

An electrode material for a redox battery is particularly required to have the following performances.

1) Side reactions other than the target reaction do not occur (reaction selectivity is high), specifically, current efficiency ($\eta_I$) is high.
2) Electrode reaction activity is high, specifically, cell resistance (R) is low. That is, voltage efficiency ($\eta_V$) is high.
3) Battery energy efficiency ($\eta_E$) related to the above-described 1) and 2) is high.

$$\eta_E = \eta_I \times \eta_V$$

4) Degradation is small for repeated use (long lifespan), specifically, reduction of the battery energy efficiency ($\eta_E$) is small.

Development of electrolytes used for redox batteries has been vigorously promoted. For example, an electrolyte (for example, manganese-titanium-based electrolyte) for which manganese is used for a positive electrode, and chromium, vanadium, and/or titanium are used for a negative electrode is suggested as an electrolyte that has a higher electromotive force than a vanadium-based electrolyte, and that is stably available at a low price, as in Patent Literature 1.

CITATION LIST

PATENT LITERATURE

[PTL 1] Japanese Laid-Open Patent Publication No. 2012-204135

SUMMARY OF THE INVENTION

PROBLEMS TO BE SOLVED BY THE INVENTION

In order to promote the spread of redox batteries, an electrode material that has a further reduced resistance and is available at a low price is required.

The present invention has been made in view of the aforementioned circumstances, and an object of the present invention is to provide a carbon electrode material, for use in a negative electrode of a redox battery, which allows cell resistance to be reduced at the time of initial charging and discharging and can enhance battery energy efficiency.

SOLUTION TO THE PROBLEMS

The inventors of the present invention have made examinations in order to achieve the aforementioned object. As a result, the inventors have found that, when carbon particles (but excluding graphite) having small particle diameters and low crystallinity, and a carbon material (C) having high crystallinity with respect to carbon fibers (A) are used and production under a predetermined condition is performed, an electrode material having low resistance can be obtained, to complete the present invention.

The present invention has the following configuration.

1. A carbon electrode material for use in a negative electrode of a redox battery, the carbon electrode material comprising:

carbon fibers (A);
carbon particles (B) other than graphite particles;
a carbon material (C) for binding the carbon fibers (A) and the carbon particles (B) to each other,
the carbon electrode material for use in a redox battery satisfying the following requirements.

(1) a particle diameter of the carbon particles (B) other than graphite particles is not larger than 1 $\mu$m,
(2) Lc(B) is not larger than 10 nm when Lc(B) represents a crystallite size, in a c-axis direction, obtained by X-ray diffraction in the carbon particles (B) other than graphite particles,
(3) Lc(C)/Lc(A) is 1.0 to 5.0 when Lc(A) and Lc(C) represent crystallite sizes, in the c-axis direction, obtained by X-ray diffraction in the carbon fibers (A) and the carbon material (C), respectively,
(4) a meso-pore specific surface area obtained from a nitrogen gas adsorption amount is less than 30 m$^2$/g, and
(5) a number of oxygen atoms bound to a surface of the carbon electrode material is not less than 1% of a total number of carbon atoms on the surface of the carbon electrode material.

2. The carbon electrode material according to the above 1., wherein a mass ratio of the carbon material (C) to the carbon particles (B) is 0.2 to 10.

3. The carbon electrode material according to the above 1. or 2., wherein a BET specific surface area obtained from a nitrogen adsorption amount is less than 50 m$^2$/g.

4. The carbon electrode material according to any one of the above 1. to 3., wherein a water flow rate is not less than 0.5 mm/sec when a water droplet is dropped.

5. A redox flow battery comprising a negative electrode having the carbon electrode material according to any one of the above 1. to 4.

6. A method for producing the carbon electrode material according to any one of the above 1. to 4., the method comprising:

a step of impregnating the carbon fibers (A) with the carbon particles (B) other than graphite particles, and the carbon material (C) having not been carbonized;
a carbonizing step of heating a product obtained in the impregnating step, under an inert gas atmosphere, at a temperature of not lower than 500°C and lower than 2000°C;

a primary oxidization step of performing oxidization at a temperature of 500 to 900°C in a dry process;

a graphitization step of performing heating at a temperature of 1300 to 2300°C under an inert gas atmosphere; and

a secondary oxidization step of performing oxidization at a temperature of 500 to 900°C in a dry process,

so as to perform the steps in order, respectively.

EFFECT OF THE INVENTION

According to the present invention, a carbon electrode material, for use in a negative electrode of a redox battery, which allows cell resistance to be reduced at the time of initial charging and discharging and has excellent battery energy efficiency, is obtained. The carbon electrode material of the present invention is preferably used for flow-type and non-flow type redox batteries or a redox battery composited with a lithium, capacitor, and fuel-cell system.

BRIEF DESCRIPTION OF THE DRAWINGS

[FIG. 1] FIG. 1 is a schematic diagram illustrating a redox battery.

[FIG. 2] FIG. 2 is an exploded perspective view of a liquid-circulation type electrolytic cell which has a three-dimensional electrode suitable for use in the present invention.

[FIG. 3] FIG. 3 illustrates an SEM photograph (magnification is 100) of No. 5 (example that satisfies the requirements of the present invention) in Table 3A according to example 1 described below.

[FIG. 4] FIG. 4 illustrates an SEM photograph (magnification is 100) of No. 10 (comparative example that does not satisfy the requirements of the present invention) in Table 3A according to example 1 described below.

DESCRIPTION OF EMBODIMENTS

The inventors of the present invention have made examinations by using carbon particles other than graphite particles in order to provide a carbon electrode material that allows cell resistance to be reduced at the time of initial charging and discharging. As a result, it has been found that, by using carbon particles having small particle diameters and low crystallinity, a reaction surface area is increased, addition of oxygen functional groups is facilitated, and reaction activity is enhanced, to achieve low resistance.

Specifically, in the present invention, carbon particles that satisfy the following requirements (1) and (2) are adopted as carbon particles other than graphite particles.

(1) A particle diameter of carbon particles (B) other than graphite particles is not larger than 1 $\mu$m.

(2) Lc(B) is not larger than 10 nm when Lc(B) represents a crystallite size, in a c-axis direction, obtained by X-ray diffraction in the carbon particles (B) other than graphite particles.

A reaction surface area is increased and resistance can be reduced by using carbon particles having small particle diameters as in the above-described (1). Furthermore, as in the above-described (2), carbon particles having low crystallinity facilitate introduction of oxygen functional groups, and reaction activity is enhanced, thereby further reducing resistance.

Furthermore, in the present invention, as a carbon material (C), a carbon material that has binding properties for binding both carbon fibers (A) and the carbon particles (B) other than graphite particles, has high crystallinity with respect to the carbon fibers (A), and satisfies the following requirement (3), is used.

(3) Lc(C)/Lc(A) is 1.0 to 5 when Lc(A) and Lc(C) represent crystallite sizes, in the c-axis direction, obtained by X-ray diffraction in the carbon fibers (A) and the carbon material (C), respectively.

In the description herein, "binding both the carbon fibers (A) and the carbon particles (B) other than graphite particles" (in other words, the carbon material used in the present invention acts as a binding agent for binding the carbon fibers and the carbon particles other than graphite particles) means that the carbon material firmly binds the surfaces and insides of the carbon fibers and the carbon particles other than graphite particles (including binding between the carbon fibers, and binding carbon particles other than graphite particles to each other) to each other, and the surfaces of the carbon particles other than graphite particles are exposed while the carbon fibers are covered with the carbon material in terms of the entire electrode material.

However, it is preferable that the carbon material that has bound the carbon fibers and the carbon particles is not in a coating state. In the description here, "not in a coating state" means that the carbon material (C) does not form a webbed form such as a totipalmate form or a palmate form between fibers of the carbon fibers (A). In a case where the coating state is formed, liquid permeability for the electrolyte deteriorates and the reaction surface area of the carbon particles cannot be effectively utilized.

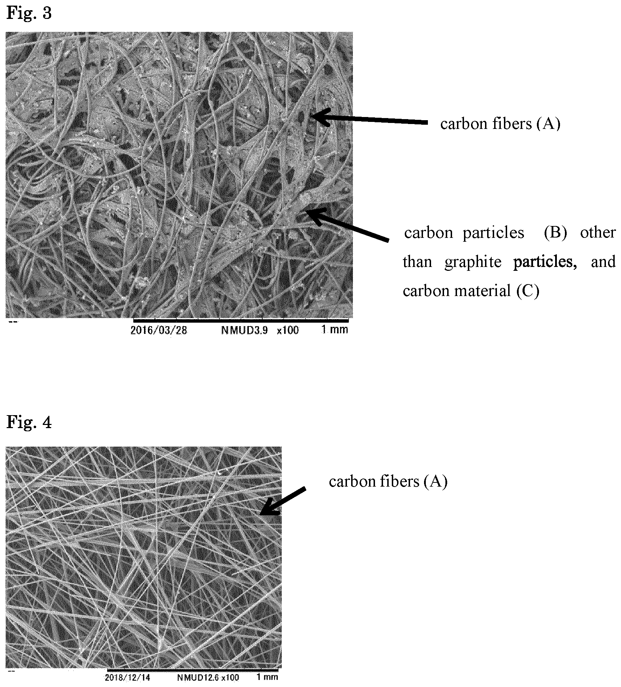

For reference, FIG. 3 illustrates an SEM photograph representing a state where both the carbon fibers (A) and the carbon particles (B) other than graphite particles are bound. FIG. 3 illustrates an SEM photograph (magnification is 100) of No. 5 (example that satisfies the requirements of the present invention) in Table 3A according to example 1 described below. FIG. 3 indicates that the carbon material (C) firmly binds the surfaces and insides of the carbon fibers (A) and the carbon particles (B) other than graphite particles, and the surfaces of the carbon particles (B) other than graphite particles are exposed while the carbon fibers (A) are covered by the carbon material (C).

Meanwhile, FIG. 4 illustrates an SEM photograph representing a state where both the carbon fibers (A) and the carbon particles (B) other than graphite particles are not bound. FIG. 4 illustrates an SEM photograph (magnification is 100) of No. 10 (comparative example that does not satisfy the requirements of the present invention) in Table 3A according to example 1 described below.

An efficient conductive path between the carbon particles and the carbon fibers is formed since the carbon material firmly binds, for example, the carbon fibers to each other through the carbon particles other than graphite particles. A content ratio of a content of the carbon material to a total content of the carbon fibers, the carbon particles other than graphite particles, and the carbon material needs to be large in order to form the conductive path. Therefore, in the present invention, the above-described content ratio is preferably not less than 14.5%. Meanwhile, in the example in Patent Literature 1 described above, the content ratio of the carbon material is 14.4% at most, and is less than that in the present invention. In this point, the present invention and Patent Literature 1 are different from each other. In Patent Literature 1, it is merely considered that the carbon material to be used is caused to act as a partial adhesive in order to fix (adhere) only a portion at which carbon fibers and carbon particulates are originally in contact with each other. Furthermore, in Patent Literature 1, crystallinity of the carbon material for the binding is not specifically described. In order to form an excellent conductive path, a carbon material having high crystallinity with respect to the carbon fibers is used as in the present invention to enhance electron conductivity, whereby the electrons can be more efficiently transferred.

Furthermore, the carbon electrode material of the present invention satisfies the following requirements (4) and (5).

(4) A meso-pore specific surface area obtained by a nitrogen gas adsorption method is less than 30 $m^2/g$.
(5) The number of oxygen atoms bound to a surface of the carbon electrode material is not less than 1% of the total number of carbon atoms on the surface of the carbon electrode material.

For the meso-pore specific surface area defined in the above-described (4), a meso-pore region having a diameter of 2 to 50 nm is measured as described below in detail, and the meso-pore specific surface area is generally used as an index for more effectively indicating performance of the electrode material as compared with a BET specific surface area for which all the pores are measured.

According to the above-described (5), oxygen atoms can be introduced into edge surfaces or defective structural portions of carbon. As a result, the introduced oxygen atoms are generated as a reactive group such as a carbonyl group, a quinone group, a lactone group, or a free-radical oxide, on the surface of the electrode material. Therefore, the reactive groups make a large contribution to electrode reaction, thereby achieving sufficiently low resistance.

The electrode material of the present invention has the above-described structure, so that an electrode that has an enhanced reaction activity and a reduced resistance, and is available at a low price can be obtained.

The present invention will be described below in detail for each element with reference to FIG. 2.

FIG. 2 is an exploded perspective view of a liquid-circulation type electrolytic cell that is preferably used for the present invention. In the electrolytic cell shown in FIG. 2, an ion-exchange membrane 3 is disposed between two current collecting plates 1, 1 opposing each other, and liquid flow paths 4a, 4b for electrolyte are formed by spacers 2 on both sides of the ion-exchange membrane 3 along the inner surfaces of the current collecting plates 1, 1. An electrode material 5 is disposed in at least one of the liquid flow paths 4a, 4b. A liquid inflow port 10 and a liquid outflow port 11 for the electrolyte are disposed at each current collecting plate 1. In a structure (three-dimensionally formed electrode structure) in which the electrode is formed by the electrode material 5 and the current collecting plates 1, and the electrolyte passes in the electrode material 5 as shown in FIG. 2, the entire pore surface of the electrode material 5 can be used as an electrochemical reaction field to enhance charging and discharging efficiency while electrons are assuredly transferred by the current collecting plates 1. As a result, the charging and discharging efficiency of the electrolytic cell is enhanced.

As described above, the electrode material 5 of the present invention is an electrode material in which the carbon fibers (A) act as a base material, and the carbon particles (A) other than graphite particles are carried by the high-crystalline carbon material (C), and the above-described requirements (1) to (5) are satisfied. Details of the requirements are as follows.

[Carbon fibers (A)]

The carbon fibers used in the present invention are fibers that are obtained by heating and carbonizing a precursor of organic fiber (details will be described below), and that contains carbon at a mass ratio of not less than 90% (JIS L 0204-2). Examples of the precursor of the organic fiber as a raw material of the carbon fibers include: acrylic fibers such as polyacrylonitrile; phenol fibers; PBO fibers such as polypara-phenylenebenzobisoxazole (PBO); aromatic polyamide fibers; pitch fibers such as isotropic pitch fiber, anisotropic pitch fiber, and mesophase pitch; and cellulose fibers. Among them, acrylic fibers, phenol fibers, cellulose fibers, isotropic pitch fiber, and anisotropic pitch fiber are preferably used as the precursor of organic fiber from the viewpoint of, for example, their excellent strength and elastic modulus. Acrylic fibers are more preferable. The acrylic fiber is not particularly limited as long as the main component of the acrylic fiber is acrylonitrile. However, a content of acrylonitrile in a monomer in a raw material which forms the acrylic fiber is preferably not less than 95 mass % and more preferably not less than 98 mass %.

A mass average molecular weight of the organic fiber is, but is not particularly limited to, preferably not less than 10000 and not larger than 100000, more preferably not less than 15000 and not larger than 80000, and even more preferably not less than 20000 and not larger than 50000. The mass average molecular weight can be measured by a method such as gel permeation chromatography (GPC) or a solution viscosity method.

An average fiber diameter of the carbon fibers is preferably 0.5 to 40 $\mu$m. When the average fiber diameter is less than 0.5 $\mu$m, liquid permeability deteriorates. Meanwhile, when the average fiber diameter is larger than 40 $\mu$m, a reaction surface area of a fiber portion is reduced to enhance cell resistance. The average fiber diameter is more preferably 3 to 20 $\mu$m in consideration of balance between the liquid permeability and the reaction surface area.

In the present invention, a structure of the carbon fibers is preferably used as a base material. Thus, the strength is enhanced, and handling and processing are facilitated. Specific examples of the structure of the carbon fibers include spun yarns, bundled filament yarns, non-woven fabrics, knitted fabrics, and woven fabrics which are sheet-like objects made of carbon fibers, special knitted/woven fabrics described in, for example, Japanese Laid-Open Patent Publication No. S63-200467, and paper made of carbon fibers. Among them, non-woven fabrics, knitted fabrics, woven fabrics, and special woven/knitted fabrics which are made of carbon fibers, and paper made of carbon fibers are more preferable from the viewpoint of handleability, processability, productivity, and the like.

In a case where non-woven fabrics, knitted fabrics, woven fabrics, or the like are used, an average fiber length is preferably 30 to 100 mm. In a case where paper made of carbon fibers is used, an average fiber length is preferably 5 to 30 mm. In the above-described ranges, uniform fiber structure can be obtained.

As described above, the carbon fibers are obtained by heating and carbonizing the precursor of the organic fiber. The "heating and carbonizing" preferably includes at least a flameproofing step and a carbonizing (calcining) step. However, among them, the carbonizing step may not necessarily be performed after the flameproofing step as described above. The carbonizing step may be performed after a flameproofed fiber is impregnated with the graphite particles and the carbon material as in the example described below. In this case, the carbonizing step after the flameproofing step can be omitted.

The above-described flameproofing step represents a step in which the precursor of the organic fiber is heated under an air atmosphere preferably at a temperature of not lower than 180°C and not higher than 350°C to obtain a flameproofed organic fiber. The heating temperature is more preferably not lower than 190°C and even more preferably not lower than 200°C. The heating temperature is preferably not higher than 330°C and more preferably not higher than 300°C. When the heating is performed within the above-described temperature range, the organic fiber is not thermally decomposed, and contents of nitrogen and hydrogen in the organic fiber can be reduced while the organic fiber is maintained in the form of the carbon fibers, to enhance the carbonization rate. In the flameproofing step, the organic fiber may be thermally contracted, and molecular orientation may be broken, to reduce the electrical conductivity of the carbon fibers. Therefore, the organic fiber is preferably flameproofed under a strained or drawn state, and more preferably flameproofed under a strained state.

The carbonizing step represents a step in which the flameproofed organic fiber obtained as described above is heated under an inert atmosphere (preferably, under a nitrogen atmosphere) preferably at a temperature of not lower than 1000°C and not higher than 2000°C to obtain the carbon fibers. The heating temperature is more preferably not lower than 1100°C and even more preferably not lower than 1200°C. The heating temperature is more preferably not higher than 1900°C. By performing the carbonizing step within the above-described temperature range, the carbonizing of the organic fiber progresses to obtain the carbon fibers having a pseudo graphite crystal structure.

Organic fibers have crystallinities different from each other. Therefore, the heating temperature in the carbonizing step can be selected according to a kind of the organic fiber as a raw material. For example, in a case where acrylic resin (preferably, polyacrylonitrile) is used as the organic fiber, the heating temperature is preferably not lower than 800°C and not higher than 2000°C, and more preferably not lower than 1000°C and not higher than 1800°C.

The above-described flameproofing step and carbonizing step are preferably continuously performed. A temperature rising rate is preferably not larger than 20°C/minute and more preferably not larger than 15°C/minute when the temperature rises from the flameproofing temperature to the carbonizing temperature. When the temperature rising rate is within the above-described range, the carbon fibers that maintain the shape of the organic fiber and have excellent mechanical properties can be obtained. The lower limit of the above-described temperature rising rate is preferably not less than 5°C/minute in consideration of the mechanical properties and the like.

As described below in detail for the carbon material (C), the electrode material of the present invention satisfies a condition that Lc(C)/Lc(A) is 1.0 to 5 when Lc(A) and Lc(C) represent crystallite sizes, in the c-axis direction, obtained by X-ray diffraction in the carbon fibers (A) and the carbon material (C), respectively, as defined in the above-described (3). Therefore, in the present invention, Lc(A) in the carbon fibers (A) is not particularly limited as long as the above-described (3) is satisfied, but Lc(A) is preferably 1 to 6 nm. Thus, appropriate electron conductivity, oxidation resistance with respect to sulfuric acid solvent or the like, and an effect of facilitating addition of oxygen functional groups can be effectively exhibited. A method for measuring Lc(A) and Lc(C) will be described below in detail in Examples.

[Carbon particles (B) other than graphite particles]

In the present invention, the "carbon particles other than graphite particles" are useful for increasing a reaction surface area to achieve low resistance. In the present invention, carbon particles that satisfy the above-described (1) and (2) are used for achieving low resistance.

Firstly, a particle diameter of the "carbon particles other than graphite particles" used in the present invention is not larger than 1 $\mu$m and preferably not larger than 0.5 $\mu$m as defined in the above-described (1). When the particle diameter is larger than 1 $\mu$m, the reaction surface area becomes small, and resistance is enhanced. In the description herein, the "particle diameter" represents an average particle diameter (D50) as a median diameter at 50% in a particle diameter distribution obtained by a dynamic light scattering method or the like. As the carbon particles other than graphite particles, a commercially available product may be used. In this case, a particle diameter indicated in the catalog may be adopted. The lower limit thereof is preferably not less than 0.005 $\mu$m.

A BET specific surface area, of the "carbon particles other than graphite particles" used in the present invention, obtained from a nitrogen adsorption amount is preferably not less than 20 m$^2$/g, more preferably not less than 30 m$^2$/g, and even more preferably not less than 40 m$^2$/g. When the BET specific surface area is less than 20 m$^2$/g, exposed edges of the carbon particles are reduced, and an area in contact with the electrolyte is also reduced. Therefore, low resistance may not be obtained as desired. The upper limit of the BET specific surface area is not particularly limited from the above-described viewpoint, but is preferably not larger than 2000 m$^2$/g in general, considering that viscosity of a dispersion solution is likely to be increased in bulky particles having large surface areas and processability with respect to sheets or the like deteriorates. In the description herein, the "BET specific surface area obtained from a nitrogen adsorption amount" represents a specific surface area calculated from an amount of gas molecules adsorbing when nitrogen molecules are caused to adsorb to solid particles.

Furthermore, Lc(B) in the "carbon particles other than graphite particles" used in the present invention is not larger than 10 nm as defined in the above-described (2). When carbon particles which have Lc(B) of larger than 10 nm and high crystallinity are used, introduction of oxygen functional groups becomes difficult, affinity for an aqueous electrolyte is thus reduced near the carbon particles, and reaction activity is reduced to enhance resistance. Lc(B) is preferably not larger than 6 nm. The lower limit thereof is not particularly limited from the above-described viewpoint, but is preferably not less than 0.5 nm in general in consideration of oxidation resistance with respect to the electrolyte, and the like. A method for measuring Lc(B) and La(B) will be described below in detail in Examples.

As the "carbon particles other than graphite particles" used in the present invention, for example, carbon particles having high reactivity, a large specific surface area, and low crystallinity are often used, and examples of such carbon particles include carbon blacks such as acetylene black (acetylene soot), oil black (furnace black, oil soot), Ketjen black, and gas black (gas soot). Examples of the carbon particles other than the above-described carbon blacks include carbon nanotubes (CNT), carbon nanofibers, carbon aerogel, mesoporous carbon, graphene, graphene oxide, N-doped CNT, boron-doped CNT, and fullerenes. Carbon blacks are preferably used from the viewpoint of prices of raw materials and the like.

A content of the "carbon particles other than graphite particles" used in the present invention is preferably not less than 5% and preferably not less than 10%, as a mass ratio to the total content of the carbon fibers (A), the carbon particles (B) other than graphite particles, which are described above, and the carbon material (C) described below. Thus, the carbon particles other than graphite particles can be bound by the carbon material to reduce resistance. However, in a case where an amount of the carbon particles (B) other than graphite particles is excessively large, the binding by the carbon material becomes insufficient, missing of particles is caused, and, furthermore, increase of a filling density causes deterioration of liquid permeability, so that low resistance cannot be obtained as desired. Therefore, the upper limit is preferably not larger than 90% in general. The content of the carbon fibers (A) used for calculating the above-described content is a content of a structure of non-woven fabric or the like in a case where the structure is used as the base material.

In the present invention, a mass ratio of the carbon material (C) described below to the carbon particles (B) other than graphite particles is preferably not less than 0.2 and not larger than 10, and more preferably not less than 0.3 and not larger than 7. In a case where the ratio is less than 0.2, missing of the carbon particles other than graphite particles is increased, and the carbon particles are not sufficiently bound by the carbon material. Meanwhile, in a case where the ratio is larger than 10, the carbon edge surfaces of the carbon particles as a reaction field are covered, and low resistance cannot be obtained as desired.

[Carbon material (C)]

The carbon material used in the present invention is added as a binding agent (binder) for firmly binding carbon fibers and carbon particles, other than graphite particles, which cannot be intrinsically bound to each other. In the present invention, Lc(C)/Lc(A) needs to satisfy 1.0 to 5 when Lc(A) and Lc(C) represent crystallite sizes, in the c-axis direction, obtained by X-ray diffraction in the carbon fibers (A) and the carbon material (C), respectively, as defined in the above-described (3).

Thus, by using the carbon material having binding properties and high crystallinity with respect to the carbon fibers (A), resistance to electron conductivity between the carbon particles (B) and the carbon fibers (A) is reduced, and an electron conductive path between the carbon particles (B) and the carbon fibers (A) becomes smooth. Furthermore, it has been found that, since the carbon material firmly binds, for example, the carbon fibers to each other through the carbon particles other than graphite particles, an efficient conductive path can be formed, and an action of reducing resistance by adding the above-described carbon particles other than graphite particles is more effectively exhibited.

In a case where the ratio Lc(C)/Lc(A) is less than 1.0, the above-described effect is not effectively exhibited. The above-described ratio is preferably not less than 1.5 and more preferably not less than 3.0. Meanwhile, in a case where the above-described ratio is larger than 5, addition of oxygen functional groups to the carbon material portion becomes difficult. The above-described ratio is preferably not larger than 4.5 and more preferably not larger than 4.0.

In the present invention, as long as the ratio Lc(C)/Lc(A) satisfies the ratio in the above-described range, the range of Lc(C) is not particularly limited. However, Lc(C) is preferably not larger than 10 nm and more preferably not larger than 7.5 nm from the viewpoint of further reduction of resistance. The lower limit of Lc(C) is not particularly limited from the above-described viewpoint, but is preferably not less than 3 nm in general in consideration of electron conductivity and the like.

A content [(C)/{(A)+(B)+(C)}] of the carbon material (C) with respect to the total content of the carbon fibers (A), the carbon particles (B) other than graphite particles, and the carbon material (C), which are described above, is preferably not less than 14.5%, more preferably not less than 15%, and even more preferably not less than 17%, as a mass ratio. Thus, in a case where the content of the carbon material is increased, both the carbon fibers and the carbon particles other than graphite particles can be sufficiently bound, and a binding effect by addition of the carbon material is effectively exhibited. The upper limit thereof is preferably not larger than 90% in general in consideration of liquid permeability for the electrolyte, and the like.

Furthermore, a mass ratio [(B)+(C)/{(A)+(B)+(C)}] of the total content of the carbon particles (B) other than graphite particles and the carbon material (C) to the total content of the carbon fibers (A), the carbon particles (B) other than graphite particles, and the carbon material (C), which are described above, is not particularly limited as long as the above-described requirements are satisfied, but is, for example, 50 to 70%.

Any kind of the carbon material (C) may be used in the present invention when the carbon fibers (A) and the carbon particles other than graphite particles (B) can be bound. Specifically, the kind of the carbon material (C) is not particularly limited as long as binding properties are exhibited during carbonizing when the electrode material of the present invention is produced. Examples thereof include: pitches such as coal-tar pitch and coal-based pitch; resins such as phenol resin, benzoxazine resin, epoxide resin, furan resin, vinylester resin, melamine-formaldehyde resin, urea-formaldehyde resin, resorcinol-formaldehyde resin, cyanate ester resin, bismaleimide resin, polyurethane resin, and polyacrylonitrile; furfuryl alcohol; and rubber such as acrylonitrile-butadiene rubber. These may be commercially available products.

Among them, particularly, pitches such as coal-tar pitch and coal-based pitch which are easily crystallizable are preferable since the target carbon material (C) can be obtained at a low calcining temperature. Furthermore, phenol resin is also preferably used since enhancement and reduction of crystallinity depending on a calcining temperature is small, and the crystallinity is easily controlled. Polyacrylonitrile resin is also preferably used since the target carbon material (C) can be obtained by increasing the calcining temperature. The pitches are particularly preferable.

According to a preferable aspect of the present invention, in a case where phenol resin is not used, a harmful effect (generation of formaldehyde and formaldehyde odor at room temperature) of phenol resin is not exerted, so that, for example, generation of odor at room temperature is advantageously prevented. Meanwhile, according to Patent Literature 4, phenol resin is used as an adhesive. Therefore, in addition to the above-described harmful effect being exerted, for example, equipment for controlling the concentration of formaldehyde such that the concentration of formaldehyde is not higher than a control concentration at a working site needs to be separately provided, and this is disadvantageous from the viewpoint of cost and workability.

Pitches that are particularly preferably used will be described in detail. For the above-described coal-tar pitch and coal-based pitch, a content of a meso-phase (liquid crystal phase) can be controlled by infusibilizing temperature and time. In a case where the content of the meso-phase is small, pitch in a melted state is obtained at a relatively low temperature or pitch in a liquid state is obtained at room temperature. Meanwhile, in a case where the content of the meta-phase is large, the pitch is melted at a high temperature, to enhance a carbonization yield. In a case where the pitches are applied to the carbon material (C), the content of the meso-phase is preferably large (that is, carbonization rate is high), and is, for example, preferably not less than 30% and more preferably not less than 50%. Thus, fluidity at the time of melting is reduced, and the carbon fibers can be bound to each other through the carbon particles without excessively covering the surfaces of the carbon particles other than graphite particles. The upper limit of the content is, for example, preferably not larger than 90% in consideration of exhibition of the binding properties and the like.

From the same viewpoint as described above, the melting point of the pitch is preferably not lower than 100°C and more preferably not lower than 200°C. Thus, in addition to the above-described effect being obtained, the melting point is preferable in view of reduction of odor in the impregnating process and processability. The upper limit thereof is preferably, for example, not higher than 350°C in consideration of exhibition of binding properties and the like.

(Characteristics of electrode material of the present invention)

In the electrode material of the present invention, a meso-pore specific surface area obtained by a nitrogen gas adsorption method is less than 30 $m^2/g$. In a case where the meso-pore specific surface area is large, resistance can be reduced, and the electrode material having excellent battery performance can be obtained. However, if the meso-pore specific surface area is excessively large, for example, missing of particles and reduction of strength of the electrode material may be caused.

The present invention is a technique intended for reducing the whole cell resistance. The whole cell resistance is specifically represented as a sum of reaction resistance and conductive resistance (whole cell resistance=reaction resistance+conductive resistance). Specifically, the present invention is intended to reduce the whole cell resistance by reducing the reaction resistance, and is not intended to reduce conductive resistance. Reduction of conductive resistance excessively enhances a repulsive force of a material, and the fibers pierce the ion-exchange membrane, to increase a risk of short-circuiting. As a result, the battery efficiency is likely to be reduced. Meanwhile, in the present invention, since the reaction resistance is reduced by increasing the specific surface area, the whole cell resistance can be reduced without excessively enhancing the repulsive force. As a result, stable battery efficiency is considered to be easily obtained.

In the present invention, the meso-pore specific surface area is measured based on an adsorption curve obtained when a portion to be measured is a meso-pore region having a pore diameter of not less than 2 nm and less than 40 nm and the electrode material is caused to adsorb nitrogen gas. A specific method for measuring the meso-pore specific surface area will be described in detail in Examples.

Furthermore, in the electrode material of the present invention, a BET specific surface area obtained from a nitrogen adsorption amount is preferably less than 50 $m^2/g$ and more preferably less than 40 $m^2/g$. This is because, when the BET specific surface area is not less than 50 $m^2/g$, the binding force for the carbon particles (B) other than graphite particles is reduced to cause, for example, missing of particles and reduction of strength of the electrode material. The lower limit of the BET specific surface area is not particularly limited from the above-described viewpoint, but is preferably not less than 20 $m^2/g$ in general in consideration of, for example, exposure of the edge surfaces and an area in contact with the electrolyte.

Furthermore, the electrode material of the present invention satisfies the condition that the number of oxygen atoms bound to the surface of the carbon electrode material is not less than 1% of the total number of carbon atoms on the surface of the carbon electrode material. Hereinafter, a ratio of the number of bound oxygen atoms to the total number of carbon atoms may be abbreviated as O/C. The O/C can be measured by surface analysis such as X-ray photoelectron spectroscopy (XPS) or fluorescent X-ray analysis.

By using the electrode material in which the O/C is not less than 1%, an electrode reaction velocity can be significantly enhanced, thereby achieving low resistance. Furthermore, hydrophilicity can be enhanced by controlling the O/C, and a water flow rate (preferably, not less than 0.5 mm/sec) of the electrode material as described below can be ensured. Meanwhile, by using an electrode material having a low oxygen concentration in which the O/C is less than 1%, the electrode reaction velocity at the time of discharging is lowered, and the electrode reaction activity cannot be enhanced. As a result, resistance is increased. Although a reason why electrode reaction activity (in other words, voltage efficiency) is enhanced by using the electrode material in which a lot of oxygen atoms are bound to the surface of the electrode material, is not clear in detail, a lot of oxygen atoms on the surface are considered to effectively act on affinity between the carbon material (C) and the electrolyte, emission and reception of electrons, separation of complex ions from the carbon material, complex exchange reaction, and the like.

The electrode material of the present invention has excellent hydrophilicity. The hydrophilicity can be confirmed by a water flow rate when a water droplet is dropped after the electrode material is oxidized in a dry process. In the electrode material of the present invention, the water flow rate is preferably not less than 0.5 mm/sec. Thus, affinity for the electrolyte can be determined as being sufficient. The higher the water flow rate of the electrode material is, the better the electrode material is. The water flow rate is more preferably not less than 1 mm/sec, even more preferably not less than 5 mm/sec, and, furthermore, more preferably not less than 10 mm/sec.

The weight per unit area of the electrode material of the present invention is preferably 50 to 500 g/m$^2$ and more preferably 100 to 400 g/m$^2$ in a case where the thickness (hereinafter, referred to as "spacer thickness") of the spacer 2 between the current collecting plate 1 and the ion-exchange membrane 3 is 0.3 to 3 mm. When the weight per unit area is controlled to be within the above-described range, damage to the ion-exchange membrane 3 can be prevented while the liquid permeability is ensured. Particularly, in recent years, the thickness of the ion-exchange membrane 3 tends to be reduced from the viewpoint of low resistance, and treatment and usage for reducing damage to the ion-exchange membrane 3 is very important. Furthermore, from the above-described viewpoint, the electrode material of the present invention in which non-woven fabric or paper having one face flattened is used as the base material is more preferably used. Any known flattening process can be applied. Examples of the flattening process include a process for applying slurry to one face of the carbon fibers and drying the slurry thereon, and a process for impregnation and drying on a smooth film formed of PET or the like.

The thickness of the electrode material of the present invention is preferably at least larger than the spacer thickness. For example, in a case where fabric such as non-woven fabric having a low density is used as the carbon fibers, and the carbon particles other than graphite particles and the carbon material having binding properties, which are used for the electrode material of the present invention, are carried on the fabric, the thickness of the electrode material is preferably 1.5 to 6.0 times the spacer thickness. In a case where the thickness is excessively large, the ion-exchange membrane 3 may be pierced due to compression stress of a sheet-shaped object. Therefore, the compression stress of the electrode material of the present invention is preferably not larger than 9.8 N/cm$^2$. For example, two or three layers of the electrode material of the present invention may be stacked and used in order to adjust the compression stress or the like according to the weight per unit area and/or the thickness of the electrode material of the present invention. Alternatively, another form of an electrode material may also be used in combination.

The electrode material of the present invention is used for a negative electrode of a redox battery. Meanwhile, a type of an electrode material used for a positive electrode of a redox battery is not particularly limited as long as the electrode material used for a positive electrode is a generally used one in this technical field. For example, carbon fiber paper as used for a fuel cell may be used, or the electrode material of the present invention may be used for a positive electrode as it is. It is confirmed that, for example, the electrode material of the present invention can be used for a positive electrode, and cell resistance at the time of the initial charging and discharging can be reduced for a short-term use (for example, in a case where the total time of a charging and discharging test is three hours as in Examples described below) (see Examples described below). In Examples described below, the same sample was used for the positive electrode and the negative electrode. However, the present invention is not limited thereto, and electrode materials having different compositions may be used as long as the requirements of the present invention are satisfied.

(Method for producing electrode material of the present invention)

Next, a method for producing the electrode material of the present invention will be described. The electrode material of the present invention can be produced through a carbonizing step, a primary oxidization step, a graphitization step, and a secondary oxidization step after the carbon fibers (base material) have been impregnated with the carbon particles other than graphite particles and a precursor (before carbonization) of the carbon material. The present invention has features that the carbonizing step and the graphitization step are performed under a predetermined condition, and two oxidization steps are performed such that one oxidization is performed before the graphitization step and the other oxidization is performed after the graphitization step. Particularly, performing the two oxidization processes is the most significant feature. In the description herein, the "primary oxidization step" represents the oxidization performed the first time and the "secondary oxidization step" represents the oxidization performed the second time.

Each step will be described below.

(Step of impregnating the carbon fibers with the carbon particles other than graphite particles and the precursor of the carbon material)

Firstly, the carbon fibers are impregnated with the carbon particles other than graphite particles and the precursor of the carbon material. Any known method can be adopted for impregnating the carbon fibers with the carbon particles other than graphite particles and the precursor of the carbon material. For example, the method may be such that the above-described carbon material precursor is heated and melted, the carbon particles other than graphite particles are dispersed in the obtained melt, and the carbon fibers are immersed in the melted dispersion liquid, and is thereafter cooled to room temperature. Alternatively, as in described below in Examples, a method in which the above-described carbon material precursor and the carbon particles other than graphite particles are dispersed in a solvent such as alcohol or water to which a binder (provisional adhesive) such as polyvinyl alcohol which is eliminated during carbonization is added, and the carbon fibers are immersed in the dispersion liquid and thereafter heated and dried, may be used. Unnecessary liquid in the melted dispersion liquid or the dispersion liquid in which the carbon fibers have been immersed can be eliminated by, for example, a method in which the unnecessary dispersion liquid generated when the carbon fibers have been immersed in the dispersion liquid is squeezed through nip rollers having a predetermined clearance, or a method in which the surface of unnecessary dispersion liquid generated when the carbon fibers have been immersed in the dispersion liquid is scraped by a doctor blade or the like.

Thereafter, drying is performed under an air atmosphere at, for example, 80 to 150°C.

(Carbonizing step)

The carbonizing step is performed for calcining the product obtained by the impregnation in the above-described step. Thus, the carbon fibers are bound to each other through the carbon particles other than graphite particles. In the carbonizing step, preferably, decomposed gas generated during carbonization is sufficiently eliminated. For example, heating is performed at a temperature of not lower than 500°C and lower than 2000°C under an inert atmosphere (preferably, under a nitrogen atmosphere). The heating temperature is preferably not lower than 600°C, more preferably not lower than 800°C, even more preferably not lower than 1000°C, and, furthermore, more preferably not lower than 1200°C, and more preferably not higher than 1400°C and even more preferably not higher than 1300°C.

The heating time under the inert atmosphere is, for example, preferably one to two hours. By a process in such a short time, binding of the carbon fibers to each other and elimination of decomposed gas during carbonization sufficiently proceed.

As described above, although the process corresponding to the above-described carbonizing step may be performed after flameproofing the fibers, the carbonizing process after flameproofing the fibers may be omitted. That is, the method for producing the electrode material of the present invention is mainly classified into the following method 1 and method 2.

- Method 1: Flameproofing the fibers→carbonizing the fibers→impregnation with the carbon particles other than graphite particles and the carbon material→carbonizing→primary oxidization→graphitization→secondary oxidization
- Method 2: Flameproofing the fibers→impregnation with the carbon particles other than graphite particles and the carbon material→carbonizing→primary oxidization→graphitization→secondary oxidization

According to the method 1, the carbonizing is performed twice and processing cost is thus increased. However, since a sheet used as the electrode material is unlikely to be influenced by difference in a volume shrinkage rate, the obtained sheet is advantageously unlikely to be deformed (warped). Meanwhile, according to the method 2, the carbonizing step is performed only once and processing cost can thus be reduced. However, the obtained sheet is likely to be deformed by difference in a volume shrinkage rate during carbonizing of each material. The method 1 or the method 2 may be adopted in consideration of these points as appropriate.

(Primary oxidization step)

In the present invention, performing the first oxidization in a dry process after the above-described carbonizing step and before the graphitization step described below is important. Thus, the carbon fibers are activated, and the surfaces of the carbon particles other than graphite particles are exposed by removing the carbon material. As a result, reactivity is enhanced to achieve low resistance.

In general, oxidization can be performed in either a dry process or a wet process. For example, wet chemical oxidization and electrolytic oxidization, and dry oxidization can be performed. In the present invention, dry oxidization is performed from the viewpoint of processability and production cost. The oxidization is performed preferably under an air atmosphere. The heating temperature is controlled to be not lower than 500°C and not higher than 900°C. Thus, oxygen functional groups are introduced onto the surface of the electrode material, and the above-described effect is effectively exhibited. The heating temperature is more preferably not lower than 550°C. Furthermore, the heating temperature is more preferably not higher than 800°C and even more preferably not higher than 750°C.

The primary oxidization is preferably performed for, for example, five minutes to one hour. In a case where the primary oxidization liquid is obtained in a time shorter than five minutes, the entirety of the carbon electrode material may not be uniformly oxidized. Meanwhile, in a case where the primary oxidization liquid is obtained in a time longer than one hour, the strength of the carbon electrode material may be reduced or working efficiency may be reduced.

In the primary oxidization step, from two viewpoints of increasing a specific surface area of the electrode material and maintaining a mechanical strength, a mass yield (that is, a ratio of a mass of the electrode material after the primary oxidization liquid to a mass of the electrode material before the primary oxidization) of the electrode material obtained from the masses before and after the primary oxidization step is preferably adjusted to be, for example, not less than 85% and not larger than 95%. The mass yield can be adjusted by adjusting, for example, a processing time or a heating temperature in the dry air oxidization as appropriate.

(Graphitization step)

The graphitization step is performed in order to sufficiently enhance crystallinity of the carbon material, enhance electron conductivity, and enhance oxidation resistance with respect to, for example, a sulfuric acid solution in the electrolyte. After the primary oxidization step, heating is further performed under an inert atmosphere (preferably, under a nitrogen atmosphere) preferably at a temperature that is not lower than 1300°C and higher than the heating temperature in the above-described carbonizing step, and more preferably at temperature of not lower than 1500°C. The upper limit of the temperature is preferably not higher than 2000°C in consideration of imparting high electrolyte affinity to the carbon material.

(Secondary oxidization step)

After the graphitization step, the secondary oxidization is further performed, whereby oxygen functional groups such as a hydroxyl group, a carbonyl group, a quinone group, a lactone group, or a free-radical oxide are introduced onto the surface of the electrode material. As a result, the above-described ratio O/C≥1% can be achieved. These oxygen functional groups make a large contribution to electrode reaction, thereby obtaining a sufficiently low resistance. Furthermore, the water flow rate for water can be enhanced.

For the secondary oxidization process, various processes such as wet chemical oxidization and electrolytic oxidization, and dry oxidization can be applied. In the present invention, dry oxidization is performed from the viewpoint of processability and production cost. The oxidization is performed preferably under an air atmosphere. The heating temperature is controlled to be not lower than 500°C and not higher than 900°C. Thus, oxygen functional groups are introduced onto the surface of the electrode material, and the above-described effect is effectively exhibited. The heating temperature is preferably not lower than 600°C and more preferably not lower than 650°C. Furthermore, the heating temperature is preferably not higher than 800°C and more preferably not higher than 750°C.

The secondary oxidization is preferably performed for, for example, five minutes to one hour as in the above-described primary oxidization. In a case where the primary oxidization liquid is obtained in a time shorter than five minutes, the entirety of the carbon electrode material may not be uniformly oxidized. Meanwhile, in a case where the primary oxidization liquid is obtained in a time longer than one hour, the strength of the carbon electrode material may be reduced or working efficiency may be reduced.

The condition for the first oxidization and the condition for the second oxidization may be the same or different from each other as long as the above-described conditions are satisfied. However, the heating temperature in the second oxidization (secondary oxidization) is preferably higher than that in the first oxidization (primary oxidization). In the primary oxidization, graphitization for enhancing crystallinity has not been performed yet and oxidization is considered to proceed expeditiously. Therefore, the heating temperature in the primary oxidization is controlled to be lower than that in the secondary oxidization.

Furthermore, in the secondary dry oxidization step, from the viewpoint of maintaining the mechanical strength of the electrode material, a mass yield (that is, a ratio of a mass of the electrode material after the secondary oxidization liquid to a mass of the electrode material before the secondary oxidization) of the electrode material obtained from the masses before and after the oxidization is preferably adjusted to be not less than 90% and not larger than 96%. The above-described mass yield can be adjusted by adjusting, for example, a processing time or a heating temperature in the dry air oxidization as appropriate.

EXAMPLES

The present invention will be described below in more detail by means of examples and comparative examples. However, the present invention is not limited by the following examples. Hereinafter, % represents "mass%" unless otherwise specified.

In the examples, the following items were measured. The specific measurement methods are as follows.

(1) Measurement of crystallite size (Lc) in c-axis direction by X-ray diffraction

Specifically, Lc(A) of the carbon fibers, Lc(B) and La(B) of the carbon particles other than graphite particles, and Lc(C) of the carbon material were measured as follows.

The carbon fibers, the carbon particles other than graphite particles, and the carbon material, respectively (individual elements) used in the examples were sequentially subjected to the same heating process as in example 1, and finally processed samples were used for the measurement. Basically, it is considered that the carbon crystallinity is influenced dominantly by thermal energy imparted to the sample, and the crystallinity of Lc is determined by a thermal history of the sample at the highest temperature. However, it is considered that a graphene laminate structure formed in the graphitization step may be broken depending on a degree of the succeeding oxidization, and, for example, generation of a defective structure reduces crystallinity. Therefore, the finally processed samples were used.

The sample of each individual element obtained as described above was pulverized by using an agate mortar until the particle diameter became about 10 $\mu$m. About 5 mass % of X-ray standard high-purity silicon powder as an internal standard substance was mixed with the pulverized sample, and filled in a sample cell, and a wide angle X-ray measurement was performed by diffractometry by using CuK$\alpha$ rays as a ray source.

For the carbon fibers (A), the carbon particles (B) other than graphite particles, and the carbon material (C) for binding the carbon fibers (A) and the carbon particles (B), which were used in the electrode material of the present invention, peaks were separated from a chart obtained by the wide angle X-ray measurement to calculate the respective Lc values. Specifically, a peak having a top in a range where twice (2$\theta$) the diffraction angle $\theta$ was 26.4° to 26.6° was set as the carbon particles (B) other than graphite particles, and a peak having a top in a range where twice (2$\theta$) the diffraction angle $\theta$ was 25.3° to 25.7° was set as the carbon material (C). A peak shape as a sine wave was determined from each peak top, and a peak shape as a sine wave was thereafter determined from a trailing portion appearing near 24.0° to 25.0° and set as the carbon fibers (A). Lc of each of the carbon fibers (A), the carbon particles (B), and the carbon material (C) was calculated by the following method based on the three peaks obtained by the separation in the above-described method.

The curve was corrected by the following simple method without performing correction related to so-called Lorentz factor, polarization factor, absorption factor, atomic scattering factor, and the like. That is, a substantial intensity from a baseline of a peak corresponding to <002> diffraction was re-plotted, to obtain a <002> corrected intensity curve. The crystallite size Lc in the c-axis direction was obtained by the following equation from a length (half width $\beta$) of a line segment obtained by a line that was parallel to an angle axis and drawn at 1/2 of the peak height intersecting the corrected intensity curve.

$$Lc=(k\cdot\lambda)/(\beta\cdot\cos\theta)$$

wherein structure factor k=0.9 and wavelength $\lambda$ =1.5418Å are satisfied, $\beta$ represents a half width of <002> diffraction peak, and $\theta$ represents a <002> diffraction angle.

(2) Measurement of specific surface area of electrode material

(2-1) Measurement of a meso-pore specific surface area (S2-40 nm: m$^2$/g) in which a pore diameter was not less than 2 nm and less than 40 nm.

About 50 mg of the sample was taken out through measurement, and vacuum-dried at 130°C for 24 hours. For the dried sample having been obtained, a nitrogen adsorption amount was measured with use of an automatic specific surface area measurement device (GEMINI VII manufactured by SHIMADZU CORPORATION) by a gas adsorption method using nitrogen gas, and a nitrogen adsorption isotherm during adsorption was analyzed by a BJH method to obtain a meso-pore specific surface area (m$^2$/g) in which a pore diameter was not less than 2 nm and less than 40 nm.

(2-2) Measurement of BET specific surface area (BET: m$^2$/g)

About 50 mg of the sample was taken out through measurement, and vacuum-dried at 130°C for 24 hours. For the dried sample having been obtained, a nitrogen adsorption amount was measured with use of an automatic specific surface area measurement device (GEMINI VII manufactured by SHIMADZU CORPORATION) by using a gas adsorption method using nitrogen gas, and a BET specific surface area (m$^2$/g) was determined by a multipoint method based on the BET method.

(3) Measurement of O/C by XPS surface analysis

A 5801MC device available from ULVAC-PHI, Inc. was used for measurement by X-ray photoelectron spectroscopy abbreviated as ESCA or XPS.

Firstly, the sample was fixed onto a sample holder by a Mo plate, exhaustion was sufficiently performed in a preliminary exhaustion chamber, and the sample was thereafter put into a chamber in a measurement chamber. Monochromated AlKα rays were used as a ray source, output was performed at 14 kV and 12 mA, and a degree of vacuum in the device was $10^{-8}$ torr.

Scanning for all the elements was performed to examine structures of the surface elements, and narrow scanning for detected elements and anticipated elements was performed to assess an existence ratio thereof.

A ratio of the number of oxygen atoms bound to the surface to the total number of carbon atoms on the surface was calculated as a percentage (%), to calculate the O/C.

(4) Charging and discharging test

(4-1) Measurement of whole cell resistance (whole cell resistance at SOC of 50%)

An electrode material obtained in a method described below was cut out so as to have a 2.7 cm side in the up-down direction (liquid flowing direction), a 3.3 cm side in the width direction, and an electrode area of 8.91 $cm^2$. In this test, since the total time of charging and discharging is short, even if the electrode material of the present invention is used also for a positive electrode, adverse effect is not caused by oxidative decomposition of manganese. Therefore, the same sample was used for the positive electrode and the negative electrode. The number of the samples was adjusted such that the weight per unit area in the cell at one electrode was 100 to 300 $g/m^2$, thereby assembling the cell shown in FIG. 1. A Nafion 211 membrane was used for the ion-exchange membrane, and the spacer thickness was 0.4 mm. The whole cell resistance (whole cell resistance at the SOC of 50%, $\Omega \cdot cm^2$) was calculated by the following equation from a voltage curve obtained after 10 cycles at 144 $mA/cm^2$ in a voltage range of 1.55 to 1.00 V.

For both electrolytes of the positive electrode and the negative electrode, 5.0 moL/L of sulfuric acid aqueous solutions in which 1.0 moL/L of titanium oxysulfate and 1.0 moL/L of manganese oxysulfate, respectively, were dissolved, were used. An amount of the electrolyte was excessively large for the cell and the tube. A liquid flow rate was 10 mL per minute and the measurement was performed at 35°C.

$$\text{Whole cell resistance} = (V_{C50}\text{-}V_{D50})/(2 \times I) \ [\Omega \cdot cm^2]$$

where

$V_{C50}$ represents a charge voltage, obtained from an electrode curve, with respect to an electric quantity in the case of the state of charge being 50%.

$V_{D50}$ represents a discharge voltage, obtained from an electrode curve, with respect to an electric quantity in the case of the state of charge being 50%.

$$I = \text{current density } (mA/cm^2).$$

(4-2) Measurement of reaction resistance

In this example, a resistance component was separated and reaction resistance was also measured. As described above, whole cell resistance=reaction resistance+conductive resistance is satisfied, and the present invention is intended to reduce the whole cell resistance by reducing the reaction resistance.

Specifically, after charging was performed at a current density of 144 $mA/cm^2$ for five minutes such that the state of charge (SOC) became 50%, an AC impedance was measured in a frequency range of 20 kHz to 0.01 Hz. An intersection point intersecting the real axis was set as conductive resistance ($\Omega \cdot cm^2$), and a sum of a diameter of a semi-circular portion and a straight line portion in a low frequency region was set as reaction resistance ($\Omega \cdot cm^2$), in the obtained Nyquist plot.

(5) Water flow test for water

One drop of ion-exchanged water was dropped onto an electrode from a 3 mmφ pipette at a point that was 5 cm above the electrode, a time until the dropped water droplet permeated was measured, and a water flow rate for water was calculated by the following equation.

Water flow rate (mm/sec) for water=thickness (mm) of electrode material÷time (sec) until water droplet permeated

Example 1

In the examples, carbon blacks of A and B indicated in Table 1 and graphite particles of D indicated in Table 1 for comparison were used as the carbon particles (B) other than graphite particles, a (TGP-3500 pitch manufactured by OSAKA KASEI CO., LTD) and b (TD-4304 phenol resin manufactured by DIC CORPORATION, solid content of 40%) indicted in Table 2 were used as the carbon material (C), and polyacrylonitrile fibers indicated in Table 2 were used as the carbon fibers (A). As described below, an electrode material formed of a carbon sheet was produced and various items were measured. Each of A, B, D was a commercially available product. The average particle diameters in Table 1 indicate values indicated in the catalogs.

(No. 1)

Firstly, 2.0% of RHEODOL TW-L120 (nonionic surfactant) manufactured by Kao Corporation, 2.0% of polyvinyl alcohol (provisional adhesive), 6.7% of the carbon material a, and 7.0% of A in Table 1 as carbon particles other than graphite were added to ion-exchanged water to produce dispersion liquid.

Carbon paper (CB0-030TP6 manufactured by ORIBEST CO., LTD., weight per unit area of 30 $g/m^2$, thickness of 0.51 mm) formed of carbonized polyacrylonitrile fiber (average fiber length of 6 mm) was immersed, as a base material (fiber structure), in the dispersion liquid obtained as described above. Thereafter, unnecessary dispersion liquid was eliminated through nip rollers.

Next, drying was performed under an air atmosphere at 120°C for 20 minutes. Thereafter, the temperature was increased to 1000°C at a temperature rising rate of 5°C/minute in nitrogen gas, and the obtained product was held at this temperature for one hour, and carbonized (calcined). Thereafter, oxidization was performed under an air atmosphere at 550°C for 25 minutes (first oxidization). After the oxidization, the obtained product was cooled, and the temperature was further increased to 1500°C at a temperature rising rate of 5°C/minute in nitrogen gas, and the obtained product was held at this temperature for one hour, and graphitized. Thereafter, oxidization was performed under an air atmosphere at 650°C for five minutes (second oxidization), to obtain an electrode material (thickness of 0.43 mm, weight per unit area of 77 $g/m^2$) of No. 1.

(No. 2)

An electrode material (thickness of 0.45 mm, weight per unit area of 71 $g/m^2$) of No. 2 was obtained in the same manner as for No. 1 except that 2.0% of RHEODOL TW-L120 (nonionic surfactant) manufactured by Kao Corporation, 2.0% of polyvinyl alcohol (provisional adhesive), 6.7% of the carbon material a, and 7.0% of B in Table 1 as carbon particles other than graphite were added to ion-exchanged water to produce dispersion liquid.

(No. 3)

No. 3 represents an example of an electrode material that was merely formed from the carbon fibers without using carbon particles other than graphite particles and a carbon material. Specifically, the same heating treatment as for No. 1 was performed directly for the carbon paper, to obtain an electrode material (thickness of 0.33 mm, weight per unit area of 27 $g/m^2$) of No. 3.

(No. 4)

2.0% of RHEODOL TW-L120 (nonionic surfactant) manufactured by Kao Corporation, 2.0% of polyvinyl alcohol (provisional adhesive), 14.0% of the carbon material a, and 9.8% of the graphite particles D (example which did not satisfy the requirements of the present invention) in Table 1 were added to ion-exchanged water to produce dispersion liquid.

An electrode material (thickness of 0.46 mm, weight per unit area of 129 $g/m^2$) of No. 4 was obtained in the same process as for No. 1 except that the dispersion liquid produced as described above was used.

(No. 5)

2.0% of RHEODOL TW-L120 (nonionic surfactant) manufactured by Kao Corporation, 2.0% of polyvinyl alcohol (provisional adhesive), 5.7% of b (solid content of 40%) in Table 2 as the carbon material, and 4.0% of A in Table 1 as the carbon particles other than graphite particles were added to ion-exchanged water to produce dispersion liquid.
An electrode material (thickness of 0.38 mm, weight per unit area of 70 g/m²) of No. 5 was obtained in the same process as for No. 1 except that the dispersion liquid produced as described above was used.

(No. 6)

After the carbon paper was immersed in the dispersion liquid as in the same manner as for No. 1, carbonizing and graphitization were performed in the same manner as for No. 6. However, after that, oxidization under an air atmosphere was not performed, and an electrode material (thickness of 0.44 mm, weight per unit area of 86 g/m²) of No. 6 was obtained.

(No. 7)

2.0% of RHEODOL TW-L120 (nonionic surfactant) manufactured by Kao Corporation, 2.0% of polyvinyl alcohol (provisional adhesive), 3.8% of b (solid content of 40%) in Table 2 as the carbon material, and 1.5% of B' in Table 1 as the carbon particles other than graphite particles were added to ion-exchanged water to produce dispersion liquid.
An electrode material (thickness of 0.35 mm, weight per unit area of 55 g/m²) of No. 7 was obtained in the same process as for No. 1 except that the dispersion liquid produced as described above was used.
Table 2 indicates kinds of the used carbon materials and the like. Table 3A, Table 3B, and Table 4 indicate the measurement results of various items for Nos. 1 to 7.

[Table 1]

| Carbon particles (B) | | | |
|---|---|---|---|
| Reference character | Average particle diameter | Lc(B) (nm) | BET specific surface area (m²/g) |
| A | not larger than 400nm | 2.1 | 53 |
| B | not larger than 400nm | 2.0 | 14 |
| D | 5μ m | 35.1 | 12 |
| B' | not larger than 400nm | 2.2 | 1400 |

[Table 2]

| Carbon material (C) | | |
|---|---|---|
| Reference character | Kind | Lc(C) (nm) |
| a | Pitches | 6.0 |
| b | Phenol resin | 1.5 |

[Table 3A]

| No. | Kind of carbon particle (B) | Kind of carbon material (C) | Carbon fiber (A) | | Lc(C)/Lc(A) |
|---|---|---|---|---|---|
| | | | Kind | Lc(A) (nm) | |
| 1 | A | a | Polyacrylonitrile fiber | 1.7 | 3.5 |
| 2 | B | a | Polyacrylonitrile fiber | 1.7 | 3.5 |
| 3 | - | - | Polyacrylonitrile fiber | 1.7 | - |
| 4 | D | a | Polyacrylonitrile fiber | 1.7 | 3.5 |
| 5 | A | b | Polyacrylonitrile fiber | 1.7 | 0.9 |

(continued)

| No. | Kind of carbon particle (B) | Kind of carbon material (C) | Carbon fiber (A) | | Lc(C)/Lc(A) |
|---|---|---|---|---|---|
| | | | Kind | Lc(A) (nm) | |
| 6 | A | a | Polyacrylonitrile fiber | 1.7 | 3.5 |
| 7 | B' | b | Polyacrylonitrile fiber | 1.7 | 0.9 |

[Table 3B]

| No. | Weight per unit area of structure of carbon fiber ① (g/m²) | Weight per unit area of carbon material ② (g/m²) | Weight per unit area of carbon particle ③ (g/m²) | Total of weight per unit area ①+②+③ (g/m²) | Content ratio of carbon material ②/ (①+②+③) (%) | Content ratio of carbon material and carbon particle ②+③/(①+②+③) (%) | Mass ratio of carbon material to carbon particle ②/③ |
|---|---|---|---|---|---|---|---|
| 1 | 27 | 20 | 30 | 77 | 26.0 | 65 | 0.7 |
| 2 | 27 | 18 | 26 | 71 | 24.8 | 62 | 0.7 |
| 3 | 27 | 0 | 0 | 27 | 0.0 | 0 | - |
| 4 | 27 | 51 | 51 | 129 | 39.5 | 79 | 1.0 |
| 5 | 27 | 17 | 26 | 70 | 24.6 | 61 | 0.7 |
| 6 | 27 | 24 | 35 | 86 | 27.4 | 69 | 0.7 |
| 7 | 27 | 14 | 14 | 55 | 25.5 | 51 | 1.0 |

[Table 4]

| No. | Ratio of the number of oxygen atoms to the number of carbon atoms (O/C) (%) | Whole cell resistance (Ω•cm²) | Reaction resistance (Ω•cm²) | Water flow rate for water (mm/sec) | Specific surface area of electrode material | |
|---|---|---|---|---|---|---|
| | | | | | All pores (m²/g) | Meso pore (m²/g) |
| 1 | 4.5 | 0.62 | 0.34 | 1.2 | 48 | 28 |
| 2 | 4.3 | 0.66 | 0.40 | 1.1 | 22 | 9 |
| 3 | 3.8 | 0.91 | 0.61 | 1.1 | 2 | not measured |
| 4 | 3.1 | 0.79 | 0.56 | 1.2 | 5 | not measured |
| 5 | 2.6 | 0.79 | 0.43 | 1.1 | 32 | 21 |
| 6 | 0.4 | 0.85 | 0.55 | water did not flow | 10 | 4 |
| 7 | 2.9 | 0.73 | 0.43 | 1.1 | 265 | 144 |

Nos. 1 to 2 were the electrode materials satisfying the requirements of the present invention, and the electrode materials had low resistance. Particularly, this may be because A to B in Table 1 having small particle diameters were used as the carbon particles other than graphite, and the electrode material was produced under the predetermined condition, so that the reaction surface area was increased, the carbon fibers were activated, and the surfaces of the carbon particles other than graphite particles were exposed by removing the carbon material, to enhance electrode activity.

Meanwhile, No. 3 represents an example of the electrode material that was merely formed from the carbon fibers without using carbon particles other than graphite particles and a carbon material, and the reaction surface area was insufficient and resistance was significantly enhanced.

For No. 4, D in Table 1 in which the particle diameter of the carbon particles was large and Lc(B) was also large, was used. Therefore, the whole cell resistance was enhanced. This may be because the reaction surface area was less than that in the examples of the present invention by using carbon particles having large particle diameters, and addition of oxygen functional groups became difficult by using carbon particles having high carbon crystallinity, so that affinity for the aqueous electrolyte was reduced near the carbon particles, and reaction activity was not enhanced.

No. 5 represents an example in which the ratio Lc(C)/Lc(A) was small and resistance was enhanced. This may be because carbon crystallinity in the carbon material was less than that in the examples of the present invention, and resistance to electron conductivity between the carbon particles and the carbon fibers was enhanced, and the reaction activity of the carbon particles was not efficiently utilized.

No. 6 represents an example in which the ratio O/C was small, and resistance was enhanced and water did not flow. This may be because an amount of oxygen functional groups was small, affinity for the electrolyte was reduced as compared with the examples in the present invention, and reaction activity was reduced.

No. 7 represents an example in which the ratio Lc(C)/Lc(A) was small, and a meso-pore specific surface area was increased. Thus, resistance was enhanced. This may be because the carbon crystallinity in the carbon material was less than that in examples of the present invention, and resistance to electron conductivity between the carbon particles and the carbon fibers was thus enhanced, and the reaction activity of the carbon particles was not efficiently utilized.

INDUSTRIAL APPLICABILITY

According to the present invention, the carbon electrode material that allows cell resistance to be reduced at the time of initial charging and discharging and has excellent battery energy efficiency, can be obtained. Therefore, the carbon electrode material is useful as a carbon electrode material used for a negative electrode of a redox battery. The carbon electrode material of the present invention is preferably used for, for example, flow-type and non-flow type redox batteries and a redox battery composited with a lithium, capacitor, and fuel-cell system.

DESCRIPTION OF THE REFERENCE CHARACTERS

| | |
|---|---|
| 1 | current collecting plate |
| 2 | spacer |
| 3 | ion-exchange membrane |
| 4a, 4b | liquid flow path |
| 5 | electrode material |
| 6 | positive electrode electrolyte tank |
| 7 | negative electrode electrolyte tank |
| 8, 9 | pump |
| 10 | liquid inflow port |
| 11 | liquid outflow port |
| 12, 13 | external flow path |

**Claims**

1. A carbon electrode material for use in a negative electrode of a redox battery, the carbon electrode material comprising:

   carbon fibers (A);
   carbon particles (B) other than graphite particles;
   a carbon material (C) for binding the carbon fibers (A) and the carbon particles (B) to each other,
   the carbon electrode material for use in a redox battery satisfying the following requirements.

   (1) a particle diameter of the carbon particles (B) other than graphite particles is not larger than 1 $\mu$m,
   (2) Lc(B) is not larger than 10 nm when Lc(B) represents a crystallite size, in a c-axis direction, obtained by X-ray diffraction in the carbon particles (B) other than graphite particles,
   (3) Lc(C)/Lc(A) is 1.0 to 5.0 when Lc(A) and Lc(C) represent crystallite sizes, in the c-axis direction, obtained by X-ray diffraction in the carbon fibers (A) and the carbon material (C), respectively,

(4) a meso-pore specific surface area obtained from a nitrogen gas adsorption amount is less than 30 $m^2/g$, and

(5) a number of oxygen atoms bound to a surface of the carbon electrode material is not less than 1% of a total number of carbon atoms on the surface of the carbon electrode material.

2. The carbon electrode material according to claim 1, wherein a mass ratio of the carbon material (C) to the carbon particles (B) is 0.2 to 10.

3. The carbon electrode material according to claim 1 or 2, wherein a BET specific surface area obtained from a nitrogen adsorption amount is less than 50 $m^2/g$.

4. The carbon electrode material according to any one of claims 1 to 3, wherein a water flow rate is not less than 0.5 mm/sec when a water droplet is dropped.

5. A redox flow battery comprising a negative electrode having the carbon electrode material according to any one of claims 1 to 4.

6. A method for producing the carbon electrode material according to any one of claims 1 to 4, the method comprising:

a step of impregnating the carbon fibers (A) with the carbon particles (B) other than graphite particles, and the carbon material (C) having not been carbonized;

a carbonizing step of heating a product obtained in the impregnating step, under an inert gas atmosphere, at a temperature of not lower than 500°C and lower than 2000°C;

a primary oxidization step of performing oxidization at a temperature of 500 to 900°C in a dry process;

a graphitization step of performing heating at a temperature of 1300 to 2300°C under an inert gas atmosphere; and

a secondary oxidization step of performing oxidization at a temperature of 500 to 900°C in a dry process, so as to perform the steps in order, respectively.

Fig. 1

Fig. 2

Fig. 3

carbon fibers (A)

carbon particles (B) other than graphite particles, and carbon material (C)

2016/03/28    NMUD3.9  x100    1 mm

Fig. 4

carbon fibers (A)

2018/12/14    NMUD12.6 x100    1 mm

## INTERNATIONAL SEARCH REPORT

International application No.

PCT/JP2020/010824

### A. CLASSIFICATION OF SUBJECT MATTER
H01M 4/96(2006.01)i; H01M 8/18(2006.01)i
FI: H01M8/18; H01M4/96 B
According to International Patent Classification (IPC) or to both national classification and IPC

### B. FIELDS SEARCHED

Minimum documentation searched (classification system followed by classification symbols)
H01M4/96; H01M8/18

Documentation searched other than minimum documentation to the extent that such documents are included in the fields searched

| | |
|---|---|
| Published examined utility model applications of Japan | 1922–1996 |
| Published unexamined utility model applications of Japan | 1971–2020 |
| Registered utility model specifications of Japan | 1996–2020 |
| Published registered utility model applications of Japan | 1994–2020 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2013-16476 A (TORAY INDUSTRIES, INC.) 24.01.2013 (2013-01-24) claims 1, 5, paragraphs [0012], [0052], [0077]-[0081], [0090], [0091], table 1 (examples 1, 2), table 2(example 11) | 1-6 |
| A | JP 63-222080 A (TORAY INDUSTRIES, INC.) 14.09.1988 (1988-09-14) claims, page 2, upper left column, line 2 to lower left column, line 2, page 3, upper left column, line 7 to upper right column, line 3 | 1-6 |
| A | WO 2003/034519 A1 (TORAY INDUSTRIES, INC.) 24.04.2003 (2003-04-24) claims 8-9, page 7, line 22 to page 8, line 23, page 12, line 21 to page 14, line 14 | 1-6 |
| A | JP 2017-33758 A (TOYOBO CO., LTD.) 09.02.2017 (2017-02-09) claims 1-2, paragraphs [0015], [0018], [0077] | 1-6 |

☒ Further documents are listed in the continuation of Box C. ☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 18 May 2020 (18.05.2020) | 09 June 2020 (09.06.2020) |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

**INTERNATIONAL SEARCH REPORT**

International application No.

PCT/JP2020/010824

C (Continuation).   DOCUMENTS CONSIDERED TO BE RELEVANT

| Category* | Citation of document, with indication, where appropriate, of the relevant passages | Relevant to claim No. |
|---|---|---|
| A | JP 59-101776 A (TOYOBO BOSEKI KABUSHIKI KAISHA) 12.06.1984 (1984-06-12) claims, page 2, lower left column, line 5 to page 3, upper right column, line 17, page 4, upper left column, line 13 to upper right column, line 6, page 4, lower left column, line 6 to page 5, upper left column, line 19 | 1-6 |
| P, A | WO 2019/049934 A1 (TOYOBO CO., LTD.) 14.03.2019 (2019-03-14) claim 1, paragraphs [0025], [0035]-[0037], [0065], [0066] | 1-6 |
| P, A | WO 2019/049756 A1 (TOYOBO CO., LTD.) 14.03.2019 (2019-03-14) claims 5, 11, paragraphs [0017], [0215]-[0218], [0240]-[0242], tables 2, 4 | 1-6 |
| P, A | WO 2019/049755 A1 (TOYOBO CO., LTD.) 14.03.2019 (2019-03-14) claims 5, 9, paragraphs [0015], [0215]-[0218], [0241]-[0244], tables 2, 4 | 1-6 |

Form PCT/ISA/210 (continuation of second sheet) (January 2015)

## INTERNATIONAL SEARCH REPORT
Information on patent family members

International application No.

PCT/JP2020/010824

| Patent Documents referred in the Report | Publication Date | Patent Family | Publication Date |
|---|---|---|---|
| JP 2013-16476 A | 24 Jan. 2013 | (Family: none) | |
| JP 63-222080 A | 14 Sep. 1988 | (Family: none) | |
| WO 2003/034519 A1 | 24 Apr. 2003 | US 2004/0241078 A1 claims 8-9, paragraphs [0046]-[0051], [0069]-[0084] EP 1445811 A1 CA 2463777 A1 | |
| JP 2017-33758 A | 09 Feb. 2017 | (Family: none) | |
| JP 59-101776 A | 12 Jun. 1984 | (Family: none) | |
| WO 2019/049934 A1 | 14 Mar. 2019 | (Family: none) | |
| WO 2019/049756 A1 | 14 Mar. 2019 | TW 201918454 A | |
| WO 2019/049755 A1 | 14 Mar. 2019 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012204135 A

- JP S63200467 A